# FASCICULE DE BREVET EUROPEEN

(11) **EP 4 605 249 B1**
(45) Date de publication et mention de la délivrance du brevet: **06.05.2026**
(21) Numéro de dépôt: 23773239.1
(22) Date de dépôt: 19.09.2023
(51) Int. Cl.: B60C 11/03, B60C 11/11, B60C 11/12

(54) **PNEUMATIQUE COMPRENANT DES PAINS COMPRENANT DES INCISIONS ALLONGÉES**
REIFEN MIT LAUFFLÄCHENBLÖCKEN MIT LÄNGLICHEN EINSCHNITTEN
TYRE COMPRISING TREAD BLOCKS COMPRISING ELONGATE INCISIONS

(30) Priorité: 18.10.2022 FR 2210731
(43) Date de publication de la demande: 27.08.2025
(73) Titulaire: COMPAGNIE GENERALE DES ETABLISSEMENTS MICHELIN, 63000 Clermont-Ferrand (FR)
(72) Inventeur: FRANCOIS, Olivier, 63040 CLERMONT-FERRAND CEDEX 09 (FR)
(74) Mandataire: M.F.P. Michelin
(86) Numéro de dépôt international: PCT/EP2023/075713
(87) Numéro de publication internationale: WO 2024/083424

(56) Documents cités:
- EP-A1- 3 769 976
- WO-A1-2009/054973
- WO-A1-2012/049274
- CN-C- 1 315 664
- JP-A- H0 994 828

## Description

La présente invention concerne un pneumatique. Par pneumatique, on entend un bandage destiné à former une cavité en coopérant avec un élément de support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique des pneumatiques de compétition destinés à des épreuves de rallye lors desquelles les véhicules équipés de tels pneumatiques roulent sur un sol terreux. Des pneumatiques connus sont les pneumatiques MICHELIN LATITUDE CROSS ^{®}.

Ces pneumatiques comprennent une bande de roulement comprenant une pluralité de pains et une pluralité de découpures. Chaque pain comprend une incision ménagée dans ledit pain.

On a remarqué lors des épreuves de rallye, également appelées spéciales, l'apparition de fissures et même d'arrachement aux extrémités des incisions. Ces fissures et arrachements apparaissent d'autant plus vite que les spéciales sont longues et se déroulent sur des sols relativement agressifs et par température élevée. Ces arrachements, s'ils ne sont pas dangereux, diminuent la durée de vie du pneumatique.

Par ailleurs, on connait de l'état de la technique des pneumatiques décrits dans EP3769976, WO2012049274, WO2009054973.

L'invention a pour but de rendre le pneumatique moins sensible à l'apparition des fissures et des arrachements et ainsi d'augmenter la durée de vie du pneumatique, notamment lors d'un usage intensif, par exemple sur sols agressifs et/ou température élevée.

A cet effet, l'invention a pour objet un pneumatique comprenant une bande de roulement comprenant une pluralité de pains délimités par une pluralité de découpures, au moins un pain de la pluralité de pains comprend une incision, dite allongée, l'incision allongée étant ménagée dans ledit pain, l'incision allongée comprenant :
- des première et deuxième extrémités borgnes séparées de chaque découpure adjacente au pain par une épaisseur non nulle du ou des matériaux constituant le pain,
- des premier et deuxième points de dimensionnement définissant une direction d'élancement de l'incision allongée et une dimension maximale de l'incision allongée selon la direction d'élancement de l'incision allongée, chaque premier et deuxième point de dimensionnement étant distinct de chaque première et deuxième extrémité borgne,

les première et deuxième extrémités borgnes et les premier et deuxième points de dimensionnement étant agencés de façon à définir :
   - une portion centrale de l'incision allongée agencée entre les premier et deuxième points de dimensionnement définissant la direction d'élancement de l'incision allongée,
   - au moins une portion d'allongement de l'incision allongée agencée entre un des premier et deuxième points de dimensionnement définissant la direction d'élancement de l'incision allongée et une des première et deuxième extrémités borgnes, la ou chaque portion d'allongement étant communicante avec la portion centrale,
la portion centrale et la ou chaque portion d'allongement étant agencées de sorte que, lorsqu'on se déplace le long de l'incision allongée depuis la ou chaque portion d'allongement vers la portion centrale, on change de sens de déplacement par rapport à la direction d'élancement de l'incision allongée lorsqu'on passe par ledit point de dimensionnement de l'incision allongée définissant la direction d'élancement de l'incision allongée,
le rapport entre :
   - la longueur curviligne de la ou chaque portion d'allongement, et
   - la longueur curviligne de la portion centrale,
est strictement inférieur à 1,0.

Grâce à la portion d'allongement, les premier et deuxième points de dimensionnement sont distincts des première et deuxième extrémités de l'incision. Ainsi, les première et deuxième extrémités de l'incision, de par leur agencement par rapport aux premier et deuxième points de dimensionnement sont plus éloignées des arêtes du pain dans lequel l'incision est ménagée ce qui limite l'apparition des fissures. En outre, en étant borgne, les première et deuxième extrémités de l'incision ne débouchent pas dans les découpures ce qui les protège également de l'apparition de fissures. Autrement dit, les première et deuxième extrémités de l'incision ne communiquent pas avec les découpures.

En raison du rapport entre les longueurs curvilignes de la portion d'allongement et de la portion centrale, l'invention couvre les portions d'allongement dont la longueur curviligne est strictement inférieure à la longueur curviligne de la portion centrale. En d'autres termes, la portion d'allongement permet un gain de performance, qui bien qu'important, reste additionnel par rapport à la performance conférée par la partie centrale.

La portion d'allongement permet d'augmenter la longueur curviligne de l'incision par rapport à une incision ne comportant qu'une portion dans laquelle les premier et deuxième points de dimensionnement sont confondus avec les première et deuxième extrémités de l'incision. En d'autres termes, dans l'invention, la longueur curviligne totale de l'incision allongée entre les première et deuxième extrémités borgnes est strictement supérieure à la longueur curviligne de l'incision allongée entre les premier et deuxième points de dimensionnement. En changeant de sens de déplacement par rapport à la direction d'élancement de l'incision allongée lorsqu'on passe par ledit point de dimensionnement, on bénéficie de l'espace du pain pour agencer la portion d'allongement en s'éloignant d'au moins une arête du pain. Cette portion d'allongement permet d'augmenter la surface d'échange thermique entre la bande de roulement et l'air et donc de refroidir le pain plus efficacement que le pneumatique de l'état de la technique. Ce refroidissement limite la hausse de température du pain, notamment lors de spéciales longues, se déroulant sur des sols relativement agressifs et/ou par température élevée, et donc retarde l'apparition des fissures en préservant les propriétés du ou des matériaux constituant le pain.

Enfin, la présence de la portion d'allongement permet de créer des arêtes dans plusieurs directions contrairement à une incision droite ce qui favorise la transmission des efforts, permet d'accroitre la motricité du pneumatique ainsi que sa polyvalence dans les différentes directions de sollicitation.

La direction d'élancement est la direction droite joignant les premier et deuxième points de dimensionnement. Les premier et deuxième points de dimensionnement définissent une dimension maximale de l'incision allongée selon la direction d'élancement signifie que l'incision allongée est inscrite entre des première et deuxième droites sensiblement parallèles l'une à l'autre et passant respectivement par chaque premier et deuxième point de dimensionnement, ces première et deuxième droites étant perpendiculaires à la direction d'élancement.

La direction d'élancement de l'incision peut se parcourir selon deux sens. On change de sens lorsqu'on se déplace le long de l'incision allongée et lorsque la composante du déplacement selon la direction d'élancement de l'incision change d'un des deux sens de la direction d'élancement de l'incision pour l'autre des deux sens de la direction d'élancement de l'incision.

Les première et deuxième extrémités borgnes délimitent la longueur curviligne maximale totale de l'incision allongée. En d'autres termes, si l'incision présente plus de deux extrémités borgnes, par exemple dans le cas d'une incision ramifiée, les première et deuxième extrémités borgnes sont celles définissant la longueur curviligne la plus grande, appelée longueur curviligne maximale.

Par borgne, on comprend, comme cela est bien connu par l'homme du métier, que chaque première et deuxième extrémité est séparée de chaque découpure adjacente au pain par une épaisseur non nulle du ou des matériaux constituant le pain. Ainsi, comme précisé ci-dessus, les première et deuxième extrémités de l'incision ne débouchent pas dans les découpures, ce qui signifie que, pour tout point situé sur la hauteur radiale de chaque première et deuxième extrémité, il existe une épaisseur non nulle du ou des matériaux constituants du pain séparant ce point et son projeté orthogonal sur chaque face du pain délimitant chaque découpure adjacente.

On qualifiera de borgne toute autre extrémité de l'incision que les première et deuxième extrémités borgnes dans le cas où ladite autre extrémité satisfait les caractéristiques décrites au paragraphe précédent. Par exemple, une incision ramifiée pourra présenter d'autres extrémités borgnes que les première et deuxième extrémités borgnes.

Chaque portion d'allongement étant communicante avec la portion centrale signifie qu'il y a une continuité de l'incision allongée entre la ou chaque portion d'allongement et la portion centrale. La ou chaque portion d'allongement et la portion centrale ne sont pas disjointes l'une de l'autre, par exemple séparées par une partie du pain. En d'autres termes, lorsque l'incision est fermée radialement par le sol sur lequel roule le pneumatique, l'air peut librement circuler entre la ou chaque portion d'allongement et la portion centrale et inversement.

Un pain présente généralement plusieurs arêtes définissant un contour du pain. Ces arêtes peuvent être droites ou curvilignes. On distingue une arête d'attaque, une arête de fuite et des arêtes latérales. L'arête d'attaque est l'arête qui vient en contact la première avec le sol lorsque le pneumatique tourne dans son sens de rotation avant. L'arête de fuite est l'arête qui vient en contact la dernière avec le sol lorsque le pneumatique tourne dans son sens de rotation avant. Les arêtes latérales sont les arêtes reliant les arêtes d'attaque et de fuite.

L'angle entre deux directions est l'angle, en valeur absolue, le plus petit des deux angles définis entre une première des deux directions et la deuxième des deux directions.

La direction moyenne formée par une arête est la direction droite reliant les deux extrémités de l'arête.

Dans le cas de pneumatique de compétition, la détermination de la largeur axiale de la bande de roulement se fait sur un pneumatique non monté et non gonflé en mesurant la distance axiale entre les arêtes formant les premier et deuxième bords axiaux de la bande de roulement, ces bords axiaux formant la délimitation entre la bande de roulement et les flancs du pneumatique. Chacun de ces premier et deuxième bords axiaux comprennent les arêtes latérales des pains les plus axialement extérieurs de la bande de roulement.

Dans le cas d'un pneumatique non destiné à la compétition, on pourra déterminer la surface de roulement sur un pneumatique monté sur une jante de mesure et gonflé à la pression nominale (250 kPa ou 290kPa selon qu'il s'agit d'un pneumatique standard ou renforcé) au sens du manuel de la norme ETRTO, 2021 comme étant la surface au contact d'un sol lorsque le pneumatique est chargé à 80% de sa capacité de charge au sens du manuel de la norme ETRTO, 2021, charge représentant alors des conditions d'usage habituellement rencontrées. Une autre méthode pourra consister, sur un pneumatique monté sur une jante de mesure, non chargé et gonflé à la pression nominale (250 kPa ou 290kPa selon qu'il s'agit d'un pneumatique standard ou renforcé) au sens du manuel de la norme ETRTO (« European Tyre and Rim Technical Organisation »), 2021, en la détermination des limites axiales de la surface de roulement, par exemple, en considérant que chaque limite axiale de la surface de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

L'invention s'applique particulièrement à des pneumatiques de compétition pour véhicule automobile. Par compétition, on entend les évènements officiellement chronométrés et pas le roulage libre, connu parfois sous l'appellation « track days » ou « HDPE » (High Driving Performance Events), qui couvre des évènements officiellement non chronométrés.

L'invention s'applique très particulièrement et très préférentiellement à des pneumatiques de compétition rallye et plus préférentiellement de compétition rallye au moins sur sol terreux et/ou graveleux et/ou boueux et très préférentiellement en compétition rallye sur sol terreux.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier: une direction axiale, une direction circonférentielle et une direction radiale.

La surface de roulement du pneumatique est la surface de la bande de roulement par laquelle le pneumatique est amené à entrer en contact avec le sol lorsqu'il roule sur ce sol.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par surface circonférentielle équatoriale du pneumatique, on entend, dans un plan de coupe méridienne, la surface passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion radiale du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur d'une découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. La largeur est mesurée sensiblement perpendiculairement aux faces latérales principales.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf.

Une rainure est telle que la distance entre les faces latérales principales est telle que ces faces latérales principales ne peuvent venir en contact l'une contre l'autre, notamment lorsque le pneumatique est à l'état neuf.

Une découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un pain ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs pains et/ou une ou plusieurs découpures de sorte que les deux faces latérales principales déterminant sa longueur sont interrompues par un ou plusieurs pains et/ou une ou plusieurs découpures.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un pain ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs pains et/ou une ou plusieurs découpures de sorte que les deux faces latérales principales déterminant sa longueur sont interrompues par un ou plusieurs pains et/ou une ou plusieurs découpures sur l'ensemble d'un tour du pneumatique.

Dans des modes de réalisation, la ou chaque découpure circonférentielle, est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Dans des modes de réalisation, la ou chaque découpure transversale est munie de chanfreins. En d'autres termes, chaque découpure transversale étant délimitée radialement par des faces délimitant circonférentiellement ladite découpure transversale et reliées entre elles par une face de fond délimitant radialement vers l'intérieur ladite découpure transversale. Un chanfrein d'une découpure transversale peut être un chanfrein droit ou un chanfrein arrondi. Un chanfrein droit est formé par une face plane inclinée par rapport à la face qu'elle prolonge jusqu'au bord délimitant circonférentiellement la découpure transversale. Un chanfrein arrondi est formé par une face courbe se raccordant tangentiellement à la face qu'elle prolonge. Un chanfrein d'une découpure transversale est caractérisé par une hauteur et une largeur égale respectivement à la distance radiale et à la distance selon une direction perpendiculaire aux faces entre le point commun entre la face prolongée par le chanfrein et le bord délimitant circonférentiellement la découpure transversale.

La profondeur d'une découpure est, sur un pneumatique neuf, la distance radiale maximale entre le fond de la découpure et son projeté sur le sol lors du roulage du pneumatique. La valeur maximale des profondeurs des découpures est nommée hauteur de sculpture.

Dans des modes de réalisation, particulièrement adaptés aux pneumatiques de compétition, notamment de compétition rallye, le pneumatique selon l'invention est un pneumatique ayant un côté intérieur et un côté extérieur imposés lorsqu'il est monté sur le véhicule. Cela signifie que le pneumatique est conçu pour qu'un de ses côtés soit agencé côté intérieur et que l'autre de ses côtés soit agencé côté extérieur. Par côté extérieur, on entend le côté du pneumatique entièrement visible depuis l'extérieur du véhicule lorsque le pneumatique est monté sur le véhicule. Par côté intérieur, on entend le côté du pneumatique faisant face au passage de roue du véhicule sur lequel il est monté. Généralement, le pneumatique présente un marquage indiquant le côté intérieur et le côté extérieur.

Dans des modes de réalisation préférés, l'incision allongée présente un élancement supérieur ou égal à 1,5, de préférence 1,7 et plus préférentiellement à 2,0.

L'élancement d'une incision allongée est le rapport entre la dimension maximale de l'incision allongée selon la direction d'élancement de l'incision allongée et la dimension maximale de l'incision allongée selon une direction perpendiculaire à la direction d'élancement de l'incision allongée. Bien évidemment, les dimensions sont considérées dans un même plan.

Dans des modes de réalisation préférés, le rapport entre :
- la longueur curviligne de la ou chaque portion d'allongement, et
- la longueur curviligne de la portion centrale,
est inférieur ou égal à 0,7, de préférence à 0,5.

Dans des modes de réalisation avantageux mais optionnels, les première et deuxième extrémités borgnes et les premier et deuxième points de dimensionnement définissant la direction d'élancement de l'incision allongée sont agencés de façon à définir des première et deuxième portions d'allongement agencées respectivement entre chaque premier et deuxième point de dimensionnement définissant la direction d'élancement de l'incision allongée et chaque première et deuxième extrémité borgne, la portion centrale et chaque première et deuxième portion d'allongement étant agencées de sorte que, lorsqu'on se déplace le long de l'incision allongée depuis chaque première et deuxième portion d'allongement vers la portion centrale, on change de sens de déplacement par rapport à la direction d'élancement de l'incision allongée lorsqu'on passe respectivement par chaque premier et deuxième point de dimensionnement de l'incision allongée définissant la direction d'élancement de l'incision allongée, le rapport entre :
- la longueur curviligne de chaque première et deuxième portion d'allongement, et
- la longueur curviligne de la portion centrale,
est strictement inférieur à 1,0.

Ainsi, on allonge l'incision depuis chaque premier et deuxième point de dimensionnement ce qui permet de rendre encore moins sensibles l'incision allongée à l'apparition des fissures et des arrachements.

Dans des variantes préférées, le rapport entre :
- la longueur curviligne de chaque première et deuxième portion d'allongement, et
- la longueur curviligne de la portion centrale,
est inférieur ou égal à 0,7, de préférence à 0,5.

Dans des modes de réalisation permettant d'utiliser des procédés et des outillages de fabrication simples de l'incision allongée, la portion centrale est agencée de sorte que, lorsqu'on se déplace le long de l'incision allongée dans la portion centrale depuis le premier point de dimensionnement définissant la direction d'élancement de l'incision allongée jusqu'au deuxième point de dimensionnement définissant la direction d'élancement de l'incision allongée, on ne change pas de sens de déplacement par rapport à la direction d'élancement de l'incision allongée.

Dans des modes de réalisation permettant d'utiliser des procédés et des outillages de fabrication simples de l'incision allongée, la ou chaque portion d'allongement est agencée de sorte que, lorsqu'on se déplace le long de l'incision allongée dans ladite portion d'allongement depuis ledit point de dimensionnement définissant la direction d'élancement de l'incision allongée jusqu'à l'extrémité borgne la plus proche en se déplaçant le long de l'incision allongée, on ne change pas de sens de déplacement par rapport à la direction d'élancement de l'incision allongée.

Dans les modes de réalisation dans lesquels l'incision allongée comprend des première et deuxième portion d'allongement :
- la première portion d'allongement est préférentiellement agencée de sorte que, lorsqu'on se déplace le long de l'incision allongée dans la première portion d'allongement depuis le premier point de dimensionnement définissant la direction d'élancement de l'incision allongée jusqu'à la première extrémité borgne, on ne change pas de sens de déplacement par rapport à la direction d'élancement de l'incision allongée, et/ou
- la deuxième portion d'allongement est préférentiellement agencée de sorte que, lorsqu'on se déplace le long de l'incision allongée dans la deuxième portion d'allongement depuis le deuxième point de dimensionnement définissant la direction d'élancement de l'incision allongée jusqu'à la deuxième extrémité borgne, on ne change pas de sens de déplacement par rapport à la direction d'élancement de l'incision allongée.

Dans des modes de réalisation avantageux mais optionnels, la ou chaque portion d'allongement s'étendant selon une direction d'allongement, la direction d'allongement de la ou chaque portion d'allongement et la direction d'élancement de l'incision allongée forment un angle inférieur ou égal à 80°, de préférence allant de 30° à 70° et plus préférentiellement allant de 30° à 50°.

Ainsi, on créé des arêtes dans des directions significativement différentes ce qui permet d'améliorer la transmission des efforts et permet d'accroitre la motricité du pneumatique autant en ligne droite qu'en virage et ce, quelle que soit l'orientation du pain dans lequel est ménagée l'incision allongée.

Chaque direction d'allongement est la droite reliant l'extrémité borgne de la portion d'allongement et le point de dimensionnement qui lui est le plus proche lorsqu'on se déplace le long de l'incision allongée depuis la ou chaque portion d'allongement vers la portion centrale.

Dans des modes de réalisation avantageux mais optionnels, la direction moyenne d'élancement du pain et la direction d'élancement de l'incision allongée forment un angle inférieur ou égal à 45°, de préférence à 30°, plus préférentiellement à 15° et encore plus préférentiellement à 5°.

Ainsi, on maximise la transmission des efforts et la motricité du pneumatique. En effet, plus la direction des efforts est parallèle à la direction d'élancement du pain meilleure est la transmission des efforts et la motricité du pneumatique. Néanmoins, lorsque le pain est trop grand selon la direction des efforts, le pneumatique a tendance à perdre l'adhérence avec le sol. En ménageant l'incision allongée de sorte que la direction d'élancement de l'incision soit la plus proche possible de la direction d'élancement du pain, on augmente la probabilité que le sol rencontre une arête de l'incision lors du roulage du pneumatique et on réduit donc la probabilité de perte d'adhérence entre le pain et le sol.

Dans le cas d'un pain élancé selon la direction circonférentielle, la ligne d'élancement du pain est la ligne droite ou courbe joignant les deux arêtes d'attaque et de fuite et équidistante des arêtes latérales joignant les arêtes d'attaque et de fuite. Dans le cas d'un pain élancé selon la direction transversale, la ligne d'élancement du pain est la ligne droite ou courbe joignant les arêtes latérales joignant les arêtes d'attaque et de fuite et équidistante des arêtes d'attaque et de fuite. Pour déterminer si un pain est élancé selon la direction circonférentielle ou transversale, on inscrira le pain dans un quadrilatère dont deux des côtés sont parallèles à la direction axiale et dont les deux autres côtés sont parallèles à la direction circonférentielle. Si les deux côtés parallèles à la direction axiale sont plus grands que les deux côtés parallèles à la direction circonférentielle, on dira que le pain est élancé selon la direction transversale. Si les deux côtés parallèles à la direction axiale sont plus petits que les deux côtés parallèles à la direction circonférentielle, on dira que le pain est élancé selon la direction circonférentielle.

Dans le cas d'un pain élancé selon la direction circonférentielle, la direction moyenne d'élancement est la droite passant par les points d'intersection entre la ligne droite ou courbe d'élancement et les deux arêtes d'attaque et de fuite qu'elle croise. Dans le cas d'un pain élancé selon la direction transversale, la direction moyenne d'élancement est la droite passant par les points d'intersection entre la ligne droite ou courbe d'élancement et les deux arêtes latérales qu'elle croise.

Dans des modes de réalisation avantageux mais optionnels, le rapport entre :
- la distance selon la direction moyenne d'élancement du pain entre les premier et deuxième points de dimensionnement de l'incision allongée définissant la direction d'élancement de l'incision allongée, et
- la distance selon la direction moyenne d'élancement du pain entre des premier et deuxième points de dimensionnement du pain,
est supérieur ou égal à 0,5, de préférence à 0,7.

L'incision allongée, notamment la portion centrale, s'étend ainsi sur une partie significative du pain ce qui permet, pour les raisons expliquée ci-dessus, de maximiser la transmission des efforts et la motricité du pneumatique selon la direction d'élancement du pain.

Les premier et deuxième points de dimensionnement du pain selon la direction d'élancement du pain sont tels que, le pain est inscrit entre des première et deuxième droites sensiblement parallèles l'une à l'autre et passant respectivement par chaque premier et deuxième point de dimensionnement, ces première et deuxième droites étant perpendiculaires à la direction d'élancement du pain.

Dans des modes de réalisation avantageux mais optionnels, le rapport entre :
- la distance selon une direction perpendiculaire à la direction moyenne d'élancement du pain entre des premier et deuxième points de dimensionnement de l'incision allongée selon la direction perpendiculaire à la direction moyenne d'élancement du pain, et
- la distance selon la direction perpendiculaire à la direction moyenne d'élancement du pain entre des premier et deuxième points de dimensionnement du pain selon la direction perpendiculaire à la direction moyenne d'élancement du pain,
est supérieur ou égal à 0,3, de préférence à 0,5.

L'incision allongée, notamment la portion d'allongement, s'étend ainsi sur une partie significative du pain ce qui permet, pour les raisons expliquée ci-dessus, de maximiser la transmission des efforts et la motricité du pneumatique selon la direction perpendiculaire à la direction d'élancement du pain.

Les premier et deuxième points de dimensionnement de l'incision selon la direction perpendiculaire à la direction moyenne d'élancement du pain sont tels que, l'incision est inscrite entre des première et deuxième droites sensiblement parallèles l'une à l'autre et passant respectivement par chaque premier et deuxième point de dimensionnement, ces première et deuxième droites étant parallèles à la direction d'élancement du pain.

De façon analogue, les premier et deuxième points de dimensionnement du pain selon la direction perpendiculaire à la direction moyenne d'élancement du pain sont tels que, le pain est inscrit entre des première et deuxième droites sensiblement parallèles l'une à l'autre et passant respectivement par chaque premier et deuxième point de dimensionnement, ces première et deuxième droites étant parallèles à la direction d'élancement du pain.

Dans des modes de réalisation avantageux mais optionnels, le rapport entre :
- la longueur curviligne de la ou chaque portion d'allongement, et
- la longueur curviligne de la portion centrale,
est supérieur ou égal à 0,1, de préférence à 0,2 et plus préférentiellement va de 0,2 à 0,5.

Ainsi, on s'assure que la ou chaque extrémité borgne ne soit pas trop proche d'une arête du pain et ne risque d'engendrer à son tour des fissurations.

De préférence, afin de réduire le risque de fissuration et d'arrachement, le ou chaque pain comprend une unique incision, l'unique incision étant l'incision allongée.

Ainsi, le pain ne comprend aucune autre incision, allongée ou non, que l'incision allongée.

De façon à réduire la sensibilité d'un nombre important de pains à l'apparition des fissures et des arrachements, au moins 20%, de préférence au moins 30% du nombre des pains de la bande de roulement comprennent une incision allongée. L'homme du métier saura déterminer les pains sur lesquels il est le plus intéressant de mettre en oeuvre l'invention par essais successifs.

De façon avantageuse, au moins 50%, de préférence 75% et plus préférentiellement 100% du nombre des pains présentant un élancement circonférentiel comprennent une incision allongée.

Avantageusement, la ou chaque incision allongée présente une profondeur supérieure ou égale à 50%, de préférence à 70% et plus préférentiellement à 90% de la hauteur du ou de chaque pain dans lequel la ou chaque incision allongée est ménagée.

Avantageusement, la ou chaque incision allongée présente une profondeur supérieure ou égale à 9 mm, de préférence allant de 10 à 14 mm. Dans certaines variantes, la profondeur est sensiblement constante. Dans d'autres variantes, la profondeur est variable et, plus préférentiellement, la ou chaque portion d'allongement présente une profondeur inférieure à la profondeur de la portion centrale.

Avantageusement, la ou chaque incision allongée présente une largeur inférieure ou égale à 2,0 mm, de préférence allant de 0,5 mm à 2,0 mm.

Les caractéristiques indiquées précédemment caractérisent le pneumatique à l'état neuf.

L'invention a pour autre objet l'utilisation d'un pneumatique tel que défini ci-dessus en compétition, de préférence en compétition rallye et plus préférentiellement en compétition rallye au moins sur sol terreux et/ou graveleux et/ou boueux et très préférentiellement en compétition rallye sur sol terreux.

L'invention sera mieux comprise à la lecture de la description qui va suivre, donnée uniquement à titre d'exemple non limitatif et faite en se référant aux dessins dans lesquels:

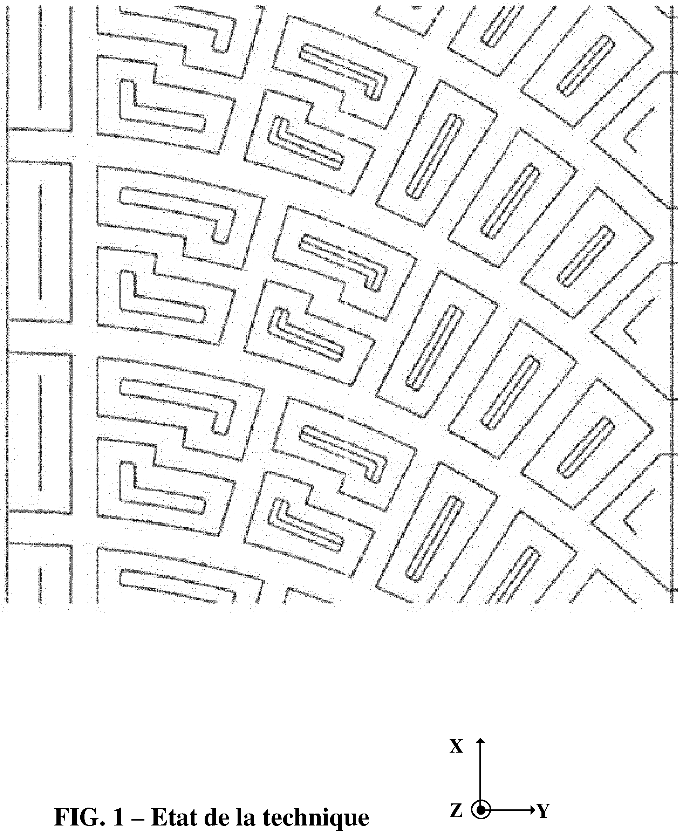

- la figure 1 est une vue schématique de dessus d'une bande de roulement du pneumatique de l'état de la technique MICHELIN LATITUDE CROSS ^{®},
- la figure 2 est une vue de dessus d'un pneumatique selon l'invention,
- la figure 3 est une vue de dessus d'un couple de premier et deuxième pneumatiques selon l'invention,
- les figures 4 à 8 sont des vues de détail d'un même pain de la bande de roulement du pneumatique de la figure 2, et
- les figures 9 à 12 sont des vues de détails de pains selon différents modes de réalisation.

Sur les figures, on a représenté un repère X, Y, Z correspondant aux directions habituelles respectivement axiale (Y), radiale (Z) et circonférentielle (X) d'un pneumatique.

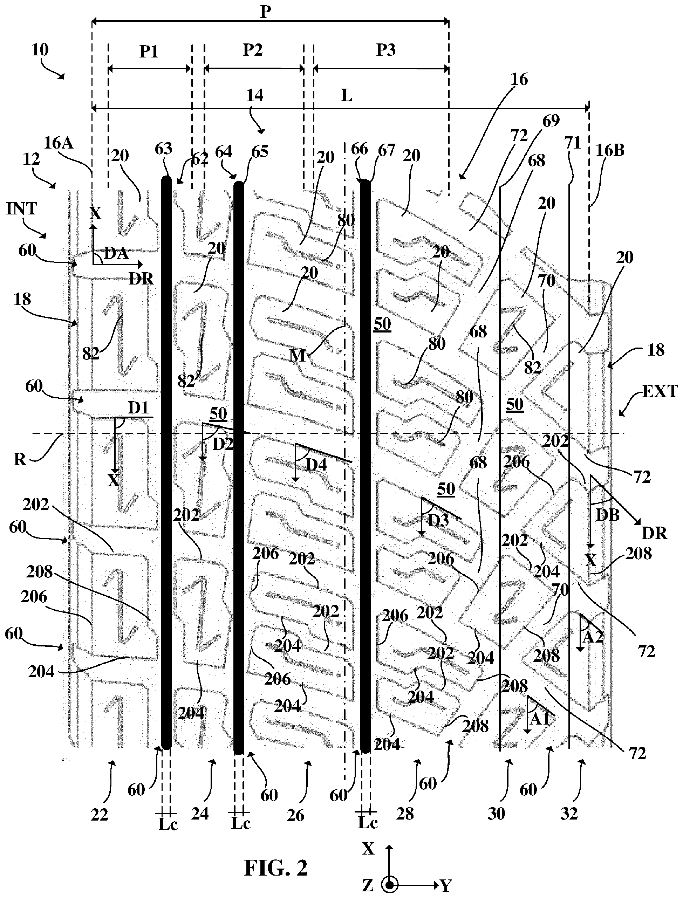

On a représenté sur la figure 2 un pneumatique, conforme à l'invention et désigné par la référence générale 10. Le pneumatique 10 présente une forme sensiblement torique autour d'un axe de révolution R sensiblement parallèle à la direction axiale Y. Le pneumatique 10 présente les dimensions 17/65 R15 et est destiné à une utilisation en compétition, ici en compétition rallye et plus préférentiellement en compétition rallye au moins sur sol terreux et/ou graveleux et/ou boueux et très préférentiellement en compétition rallye sur sol terreux. La grandeur « 17 » est relative à la largeur théorique de la bande de roulement, ici 17 cm, la grandeur 65 est relative au diamètre théorique du pneumatique, ici 65 cm et la grandeur « R15 » caractérise un pneumatique à carcasse radiale adaptée pour être monté sur une roue de 15 pouces. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage par l'intermédiaire d'une surface de roulement 16. La bande de roulement 14 comprend et est délimitée par des premier et deuxième bords axiaux 16A et 16B définissant une largeur axiale L de surface de roulement 16. Ici L=178 mm. Le pneumatique 10 comprend un côté intérieur INT et un côté extérieur EXT imposés lorsque le pneumatique 10 est monté sur un véhicule. Le premier bord axial 16A est agencé du côté intérieur INT et le deuxième bord axial 16B est agencé du côté extérieur EXT.

Le pneumatique 10 comprend deux flancs 18 prolongeant le sommet 12 radialement vers l'intérieur. Le pneumatique 10 comporte en outre deux bourrelets (non illustrés) radialement intérieurs aux flancs 18 destinés à permettre l'accrochage du pneumatique 10 sur un support de montage, par exemple une jante. Chaque flanc 18 relie chaque bourrelet au sommet 12.

La bande de roulement 14 comprend une pluralité de pains 20 et une pluralité de découpures 50 délimitant la pluralité de pains 20. La pluralité de découpures 50 comprend une pluralité de rainures 60 et une pluralité d'incisions 80.

La pluralité de rainures 60 comprend des première, deuxième et troisième rainures circonférentielles 62, 64, 66 agencées de sorte qu'il existe au moins une première, deuxième et troisième ligne 63, 65, 67 sensiblement circonférentielle passant respectivement dans chaque première, deuxième et troisième rainure circonférentielle 62, 64, 66 s'étendant continument sur une circonférence du pneumatique sans couper de pain de la pluralité de pains 20. Chaque première, deuxième et troisième ligne sensiblement circonférentielle 63, 65, 67 présente une largeur axiale Lc supérieure ou égale à 2 mm, de préférence supérieure ou égale à 5 mm et ici supérieure ou égale à 7 mm.

La première rainure circonférentielle 62 est la rainure circonférentielle parmi les première, deuxième, troisième rainures circonférentielles 62, 64, 66 agencée axialement la plus proche du premier bord axial 16A. La troisième rainure circonférentielle 66 est la rainure circonférentielle parmi les première, deuxième, troisième rainures circonférentielles 62, 64, 66 agencée axialement la plus proche du deuxième bord axial 16B. La deuxième rainure circonférentielle 64 est agencée axialement entre la première rainure circonférentielle 62 et la troisième rainure circonférentielle 66.

Chaque première, deuxième et troisième rainures circonférentielles 62, 64, 66 est agencée dans une portion axiale de largeur axiale P égale à au plus 75%, de préférence à au plus 70% de la largeur axiale L de la bande de roulement 14 et s'étendant depuis le premier bord axial 16A.

Plus précisément, la première rainure circonférentielle 62 est agencée axialement dans une première portion axiale P1 s'étendant axialement entre des limites axiales agencée à 3% et 25%, de préférence à 5% et 20% de la largeur axiale L de la bande de roulement 14 depuis le premier bord axial 16A. La deuxième rainure circonférentielle 64 est agencée axialement dans une deuxième portion axiale P2 s'étendant axialement entre des limites axiales agencée à 19% et 42%, de préférence à 23% et 39% de la largeur axiale L de la bande de roulement 14 depuis le premier bord axial 16A. La troisième rainure circonférentielle 66 est agencée axialement dans une troisième portion axiale P3 s'étendant axialement entre des limites axiales agencée à 42% et 70%, de préférence à 46% et 66% de la largeur axiale L de la bande de roulement 14 depuis le premier bord axial 16A.

La pluralité de rainures 60 comprend également des rainures transversales 72 s'étendant continument depuis le premier bord axial 16A jusqu'au deuxième bord axial 16B de la bande de roulement 14. Les rainures transversales 72 s'étendent sensiblement parallèlement les unes aux autres. Chaque rainure transversale 72 s'étend axialement selon une direction principale variable axialement. Chaque rainure transversale 72 croise chaque première, deuxième et troisième rainure circonférentielle 62, 64, 66.

L'angle formé par la direction principale de chaque rainure transversale 72 et la direction circonférentielle X est constant sur une portion axiale s'étendant axialement depuis le premier bord axial 16A et la première ligne circonférentielle 63 et présente une variation monotone non nulle, et ici strictement décroissante, sur une portion axiale complémentaire s'étendant axialement depuis la première ligne circonférentielle 63 et le deuxième bord axial 16B. En outre, l'angle DA formé par la direction principale DR de chaque rainure transversale 72 et la direction circonférentielle X du pneumatique au premier bord axial 16A est supérieur à l'angle DB formé par la direction principale DR de chaque rainure transversale 72 et la direction circonférentielle X au deuxième bord axial 16B. L'angle DA est compris entre 70° et 90° et ici sensiblement égal à 90°. L'angle DB est compris entre 30° et 60° et ici sensiblement égal à 50°.

La pluralité de pains 20 comprend des première, deuxième, troisième, quatrième colonnes circonférentielles de pains 20 de la pluralité de pains 20, respectivement désignées par les références 22, 24, 28, 26, ainsi que des première et deuxième colonnes circonférentielles additionnelles 30, 32 de pains 20 de la pluralité de 20. Les première et deuxième colonnes circonférentielles additionnelles 30, 32 de pains 20 sont distinctes des première, deuxième, troisième, quatrième colonnes circonférentielles 22, 24, 28, 26 de pains 20. Chaque colonne circonférentielle additionnelle 30, 32 est axialement plus proche du deuxième bord axial que les première, deuxième, troisième colonnes circonférentielles 22, 24, 28, 26. La première colonne circonférentielle 22 de pains 20 est la colonne de pains parmi les première, deuxième, troisième colonnes circonférentielles 22, 24, 26 de pains agencée axialement la plus proche du premier bord axial 16A. La troisième colonne circonférentielle 28 est la colonne de pains parmi les première, deuxième, troisième et quatrième colonnes circonférentielles 22, 24, 28, 26 de pains agencée axialement la plus proche du deuxième bord axial 16B. La deuxième colonne circonférentielle 24 est agencée axialement entre la première colonne circonférentielle 22 et la troisième colonne circonférentielle 28. La quatrième colonne circonférentielle 26 est agencée axialement entre la deuxième colonne circonférentielle 24 et la troisième colonne circonférentielle 28.

Chaque pain 20 de la première colonne circonférentielle 22 est délimité axialement par la première rainure circonférentielle 62 et le premier bord axial 16A. Chaque pain 20 de la deuxième colonne circonférentielle 24 est délimité axialement par les première et deuxième rainures circonférentielles 62, 64. Chaque pain 20 de la troisième colonne circonférentielle 28 est délimité axialement au moins en partie par la troisième rainure circonférentielle 66. Chaque pain 20 de la quatrième colonne circonférentielle 26 est délimité axialement par les deuxième et troisième rainures circonférentielles 64, 66.

Chaque première et deuxième colonne circonférentielle 22, 24 comprend un unique pain 20 entre deux rainures transversales 72 circonférentiellement consécutives. Chaque troisième et quatrième colonne circonférentielle 28, 26 comprend au moins deux pains 20, de préférence uniquement deux pains 20, entre deux rainures transversales 72 circonférentiellement consécutives.

Chaque première et deuxième colonne circonférentielle additionnelle 30, 32 de pains 20 est agencée axialement à l'extérieur de la troisième colonne circonférentielle 28. La deuxième colonne circonférentielle additionnelle 32 est agencée axialement à l'extérieur de la première colonne circonférentielle additionnelle 30.

Chaque pain 20 de la première colonne circonférentielle additionnelle 30 est axialement délimité par deux rainures obliques 68, 70 croisant deux rainures transversales 72 circonférentiellement consécutives. Chaque pain 20 de la deuxième colonne circonférentielle additionnelle 32 étant axialement délimité par une rainure oblique 70 croisant deux rainures transversales 72 circonférentiellement consécutives et le deuxième bord axial 16B.

Sur la figure 2, on a représenté deux lignes circonférentielles 69, 71 passant par chaque rainure oblique 68, 70. Chacune de ces lignes circonférentielles 69, 71 coupe nécessairement les pains 20 respectivement de chaque première et deuxième colonne circonférentielle additionnelle 30, 32. Ainsi, d'une manière plus générale, chaque pain 20 de chaque première et deuxième colonne circonférentielle additionnelle 30, 32 est agencé de sorte qu'il n'existe aucune ligne sensiblement circonférentielle s'étendant continument sur une circonférence du pneumatique passant par chaque rainure oblique 68, 70 délimitant chaque pain de chaque première et deuxième colonne circonférentielle additionnelle 30, 32 sans couper les pains 20 respectivement de chaque première et deuxième colonne circonférentielle additionnelle 30, 32.

Chaque première et deuxième colonne circonférentielle additionnelle 30, 32 comprend un unique pain 20 entre deux rainures transversales 72 circonférentiellement consécutives.

Chaque pain 20 de la pluralité de pains 20 comprend plusieurs arêtes définissant un contour ici sensiblement polygonal. Chaque pain 20 de chaque première, deuxième, troisième, quatrième colonne circonférentielle 22, 24, 28, 26 et de chaque première et deuxième colonne circonférentielle additionnelle 30, 32 comprend une arête d'attaque 202, une arête de fuite 204 et des arêtes latérales 206, 208.

L'arête d'attaque 202 de chaque pain 20 de chaque première, deuxième, troisième et quatrième colonne circonférentielle 22, 24, 28, 26 présente une direction moyenne formant, avec la direction circonférentielle X, respectivement un angle D1, D2, D3, D4 strictement supérieur à l'angle A1, A2 formé par la direction moyenne de l'arête d'attaque 202 de chaque pain 20 respectivement de chaque première et deuxième colonne circonférentielle additionnelle 30, 32 avec la direction circonférentielle X.

L'angle D1, D2, D4, D3, A1, A2 formé par la direction moyenne de l'arête d'attaque 202 de chaque pain 20 de chaque colonne circonférentielle 22, 24, 26, 28, 30, 32 avec la direction circonférentielle X est strictement supérieur à l'angle D2, D4, D3, A1, A2 formé, avec la direction circonférentielle X, par la direction moyenne de l'arête d'attaque 202 de chaque pain 20 de la colonne circonférentielle 24, 26, 28, 30, 32 qui lui est axialement adjacente, chaque colonne axialement adjacente 24, 26, 28, 30, 32 à une colonne circonférentielle donnée 22, 24, 26, 28, 30, 32 étant plus proche du côté extérieur EXT que chaque colonne circonférentielle donnée 22, 24, 26, 28, 30, 32 correspondante.

L'arête d'attaque 202 de 100% des pains 20 de chaque troisième et quatrième colonne circonférentielle 28, 26 présente une longueur curviligne strictement supérieure à la longueur curviligne de chaque arête latérale 206, 208 dudit pain 20.

Chaque angle D1, D2, D3, D4 est supérieur ou égal à 50°, de préférence supérieur ou égal à 60°. L'angle D1 est supérieur ou égal à l'angle D2. L'angle D2 est strictement supérieur à l'angle D3. L'angle D4 est strictement supérieur à l'angle D3. En l'espèce, chaque angle D1, D2 va de 70° à 90°, l'angle D3 va de 50° à 70° et l'angle D4 va de 65° à 85°. D1=90°, D2=85°, D3=60° et D4=75°.

Chaque angle A1, A2 est inférieur ou égal à 60°, de préférence inférieur ou égal à 50°. L'angle A1 est strictement supérieur à l'angle A2. En l'espèce, chaque angle A1, A2 va de 30° à 60°. A1=45° et A2=40°.

La largeur de chaque première, deuxième et troisième rainure circonférentielle 62, 64, 66 est supérieure ou égale à 2 mm, de préférence va de 5 mm à 15 mm et plus préférentiellement va de 7 mm à 12 mm et est ici égale à respectivement 9,7 mm, 8,7 mm et 9,7 mm. La largeur de chaque rainure transversale 72 est supérieure ou égale à 2 mm, de préférence va de 5 mm à 15 mm et plus préférentiellement va de 7 mm à 12 mm et est ici égale à 9,6 mm. La largeur de chaque rainure oblique 68, 70 est supérieure ou égale à 2 mm, de préférence va de 5 mm à 15 mm et plus préférentiellement va de 7 mm à 12 mm et est ici égale à 10 mm.

Le taux d'entaillement surfacique de la bande de roulement 14 associé aux rainures présentant une largeur supérieure ou égale à 2 mm, de préférence à 4 mm, ici associé aux rainures circonférentielle 62, 64, 66, aux rainures transversales 72 et aux rainures obliques 68, 70 va de 35% à 55% de préférence de 40% à 50% et est ici égal à 44%. Le taux d'entaillement volumique de la bande de roulement associé aux rainures présentant une largeur supérieure ou égale à 2 mm, de préférence à 4 mm, ici associé aux rainures circonférentielle 62, 64, 66, aux rainures transversales 72 et aux rainures obliques 68, 70 va de 30% à 45% de préférence de 35% à 45% et est ici égal à 39%.

La hauteur de sculpture est supérieure ou égale à 7 mm, de préférence va de 9 mm à 16 mm et est ici égale à 12 mm.

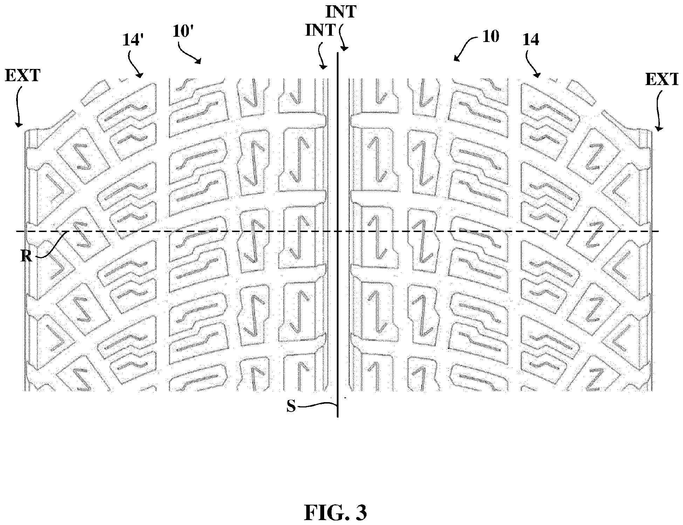

En référence à la figure 3, on a représenté un couple 100 de premier et deuxième pneumatiques 10, 10' tous les deux conformes à l'invention. La bande de roulement 14 du premier pneumatique 10 est symétrique de la bande de roulement 14' du deuxième pneumatique 10' par rapport à un plan de symétrie S sensiblement perpendiculaire à un axe de rotation R commun aux premier et deuxième pneumatiques 10, 10'. Dans l'exemple de la figure 3, le premier pneumatique 10 est destiné à être monté sur le côté droit d'un véhicule alors que le deuxième pneumatique 10' est destiné à être monté sur le côté gauche d'un véhicule de sorte que le côté intérieur INT de chaque premier et deuxième pneumatique 10, 10' fasse face au passage de roue du véhicule et de sorte que le côté EXT de chaque premier et deuxième pneumatique 10, 10' soit entièrement visible depuis l'extérieur du véhicule lorsque le pneumatique est monté sur le véhicule.

En référence à la figure 2, chaque pain 20 de la bande de roulement 14 comprend une unique incision 80. Chaque pain 20 de chaque première et deuxième colonne circonférentielle 22, 24 et de la colonne circonférentielle additionnelle 30 comprend une incision 82 dite allongée et ici une unique incision allongée 82.

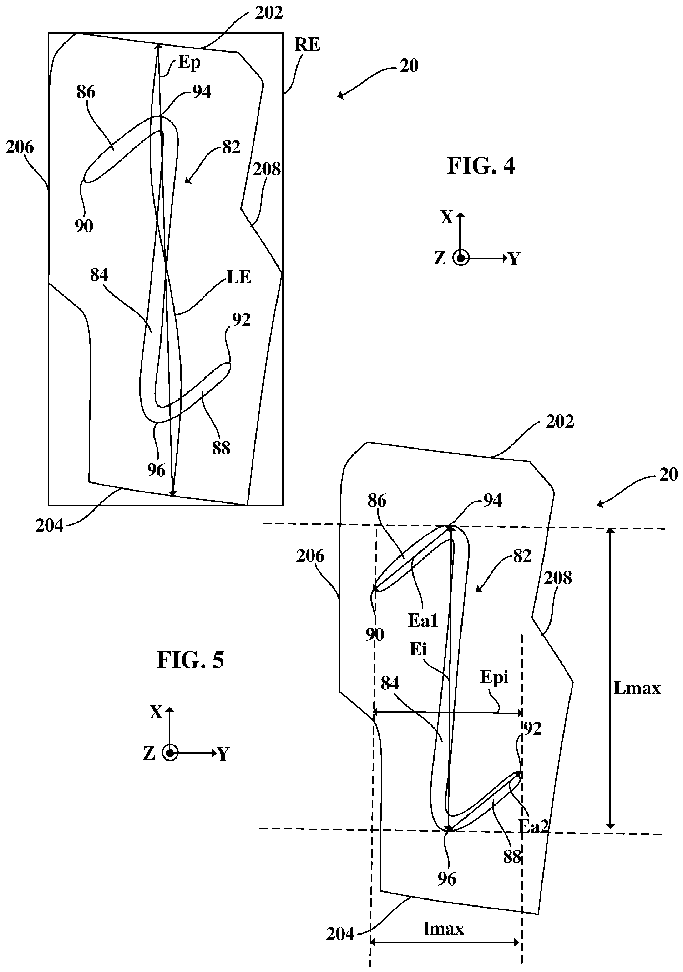

On va maintenant décrire en détails en référence aux figures 4 et 5 un pain 20 de la deuxième colonne circonférentielle 24 de pains et l'incision allongée 82 qui y est ménagée.

En référence à la figure 4, chaque pain 20 de la deuxième colonne circonférentielle 24 est élancé selon la direction circonférentielle X. En effet, chaque pain 20 de la deuxième colonne circonférentielle 24 est inscrit dans un rectangle RE dont deux des côtés sont parallèles à la direction axiale Y et dont deux autres côtés sont parallèles à la direction circonférentielle X. Les deux côtés parallèles à la direction axiale Y étant plus petits que les deux côtés parallèles à la direction circonférentielle X, chaque pain 20 de la deuxième colonne circonférentielle 24 est élancé selon la direction circonférentielle X. La ligne d'élancement LE de chaque pain 20 de la deuxième colonne circonférentielle 24 est la ligne courbe joignant les deux arêtes d'attaque 202 et de fuite 204 et équidistante des arêtes latérales 206, 208 joignant les arêtes d'attaque 202 et de fuite 204. La direction moyenne d'élancement Ep est la droite passant par les points d'intersection entre la ligne d'élancement courbe et les deux arêtes d'attaque 202 et de fuite 204 qu'elle croise.

La longueur circonférentielle de chaque pain 20 de la deuxième colonne circonférentielle 24, c'est-à-dire ici la longueur des deux côtés parallèles à la direction circonférentielle X est égale à 40 mm. La largeur de chaque pain 20 de la deuxième colonne circonférentielle 24, c'est-à-dire ici la longueur des deux côtés parallèles à la direction axiale Y est égale à 22 mm.

Chaque incision allongée 82 présente une profondeur supérieure ou égale à 9 mm, de préférence allant de 10 à 14 mm et ici égale à 12 mm. Cette profondeur est supérieure ou égale à 50%, de préférence à 70% et plus préférentiellement à 90% de la hauteur du pain 20 dans lequel ladite incision allongée 82 est ménagée. Ici, la hauteur de chaque pain 20 de la deuxième colonne circonférentielle 24 est sensiblement égale à 12 mm. Chaque incision allongée 82 présente une largeur inférieure ou égale à 2,0 mm, de préférence allant de 0,5 mm à 2,0 mm et ici égal à 1,0 mm.

Chaque incision allongée 82 comprend une portion centrale 84 et des première et deuxième portions d'allongement 86, 88, chaque première et deuxième portion d'allongement 86, 88 étant communicante avec la portion centrale 84. Chaque incision allongée 82 comprend également des première et deuxième extrémités borgnes 90, 92 ainsi que des premier et deuxième points de dimensionnement 94, 96 agencés de façon à définir d'une part, la portion centrale 84 agencée entre les premier et deuxième points de dimensionnement 94, 96 et, d'autre part, chaque première et deuxième portion d'allongement 86, 88 agencée respectivement entre chaque premier et deuxième point de dimensionnement 94, 96 et chaque première et deuxième extrémité borgne 90, 92. Chaque premier et deuxième point de dimensionnement 94, 96 est respectivement distinct de chaque première et deuxième extrémité borgne 90, 92.

La longueur curviligne de chaque première et deuxième portions d'allongement 86, 88, c'est-à-dire la longueur curviligne entre chaque premier et deuxième point de dimensionnement 94, 96 et respectivement chaque première et deuxième extrémité borgne 90, 92, est ici égale à 8 mm. La longueur curviligne de la portion centrale 84, c'est-à-dire la longueur curviligne entre chaque premier et deuxième point de dimensionnement 94, 96, est ici égale à 30 mm. Ainsi, le rapport entre la longueur curviligne de chaque première et deuxième portion d'allongement 86, 88 et la longueur curviligne de la portion centrale 84 est strictement inférieur à 1,0, de préférence inférieur ou égal à 0,7, de préférence à 0,5 et supérieur ou égal à 0,1, de préférence à 0,2 et plus préférentiellement va de 0,2 à 0,5 et ici égal à 0,27.

En référence à la figure 5, les premier et deuxième points de dimensionnement 94, 96 définissent une direction d'élancement Ei de l'incision allongée 82 et une dimension maximale Lmax de l'incision allongée 82 selon la direction d'élancement Ei de l'incision allongée 82 et une dimension maximale Imax de l'incision allongée 82 selon une direction Epi perpendiculaire à la direction d'élancement Ei. D'une manière générale, on note que la direction d'élancement Ei de l'incision allongée 82 est confondue avec la direction d'élancement de la portion centrale 84. Chaque première et deuxième portion d'allongement 86, 88 s'étend selon une direction d'allongement Ea1, Ea2. Ici Lmax=31 mm, Imax=10 mm de sorte que l'incision allongée 82 présente un élancement supérieur ou égal à 1,5, de préférence 1,7 et plus préférentiellement à 2,0 et ici égal à 3,1.

Chaque direction d'allongement Ea1, Ea2 de chaque première et deuxième portion d'allongement 86, 88 et la direction d'élancement Ei de l'incision allongée 82 forment un angle inférieur ou égal à 80°, de préférence allant de 30° à 70°, plus préférentiellement allant de 30° à 50° et ici égal à 37°.

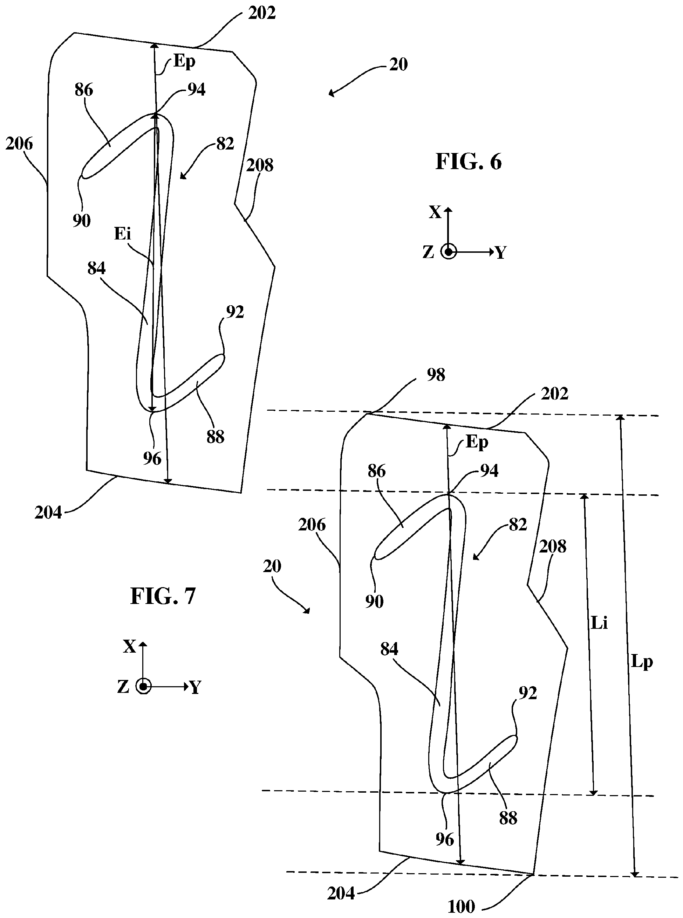

En référence à la figure 6, la direction moyenne d'élancement Ep du pain 20 et la direction d'élancement Ei de l'incision allongée 82 forment un angle inférieur ou égal à 45°, de préférence à 30°, plus préférentiellement à 15° et encore plus préférentiellement à 5°.

En référence à la figure 7, la distance Li entre les premier et deuxième points de dimensionnement 94, 96 de l'incision allongée 82 selon la direction moyenne d'élancement Ep du pain 20 est ici égale à 31 mm et la distance Lp entre des premier et deuxième points 98, 100 de dimensionnement du pain 20 selon la direction moyenne d'élancement Ep du pain 20 est ici égale à 41 mm. Le rapport entre Li et Lp est supérieur ou égal à 0,5, de préférence à 0,7 et ici égal à 0,76.

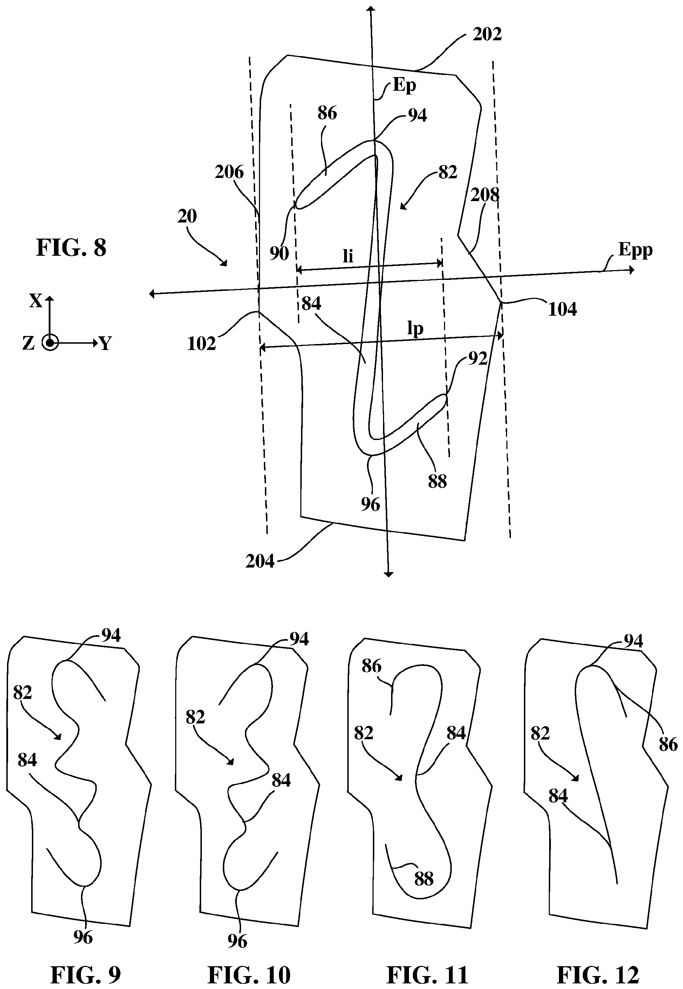

En référence à la figure 8, l'incision allongée 82 présente des premier et deuxième points de dimensionnement de l'incision allongée 82 selon une direction Epp perpendiculaire à la direction moyenne d'élancement Ep du pain 20. Ici, chaque premier et deuxième point de dimensionnement de l'incision allongée 82 selon la direction Epp est confondu respectivement avec chaque première et deuxième extrémité borgne 90, 92. La distance li entre les premier et deuxième points 90, 92 de dimensionnement de l'incision allongée 82 selon la direction Epp est égale à 11 mm. Le pain 20 présente des premier et deuxième points 102, 104 de dimensionnement du pain 20 selon la direction Epp. La distance Ip entre les premier et deuxième points 102, 104 de dimensionnement du pain 20 selon la direction Epp est égale à 22 mm. Le rapport entre li et Ip est supérieur ou égal à 0,3, de préférence à 0,5 et ici égal à 0,5.

En référence à la figure 5, la portion centrale 84 et chaque première et deuxième portion d'allongement 86, 88 sont agencées de sorte que, lorsqu'on se déplace le long de l'incision allongée 82 depuis chaque première et deuxième portion d'allongement 86, 88 vers la portion centrale 84, on change de sens de déplacement par rapport à la direction d'élancement Ei de l'incision allongée 82 lorsqu'on passe respectivement par chaque premier et deuxième point de dimensionnement 94, 96 de l'incision allongée 82.

La portion centrale 84 est agencée de sorte que, lorsqu'on se déplace le long de l'incision allongée 82 dans la portion centrale 84 depuis le premier point de dimensionnement 94 jusqu'au deuxième point de dimensionnement 96, on ne change pas de sens de déplacement par rapport à la direction d'élancement Ei de l'incision allongée 82.

La première portion d'allongement 86 est agencée de sorte que, lorsqu'on se déplace le long de l'incision allongée 82 dans la première portion d'allongement 86 depuis le premier point de dimensionnement 94 jusqu'à la première extrémité borgne 90, on ne change pas de sens de déplacement par rapport à la direction d'élancement Ei. De même, la deuxième portion d'allongement 88 est agencée de sorte que, lorsqu'on se déplace le long de l'incision allongée 82 dans la deuxième portion d'allongement 88 depuis le deuxième point de dimensionnement 96 définissant la direction d'élancement Ei jusqu'à la deuxième extrémité borgne 92, on ne change pas de sens de déplacement par rapport à la direction d'élancement Ei.

En revenant à la figure 2, on notera que au moins 20%, de préférence au moins 30% et ici 50% du nombre des pains de la bande de roulement comprennent une incision allongée 82, en l'espèce les pains 20 des colonnes circonférentielles 22, 24 et 30. Au moins 50%, de préférence 75% du nombre des pains présentant un élancement circonférentiel, c'est-à-dire ici au moins 50%, de préférence 75% du nombre des pains 20 des colonnes circonférentielles 22, 24, 30 et 32 comprennent une incision allongée 82.

On a représenté sur les figures 9 à 12 des pains comprenant des incisions allongées 82 selon d'autres modes de réalisation.

A la différence des incisions allongées 82 décrites en référence aux figures précédentes, les incisions allongées 82 des figures 9 et 10 sont telles que la portion centrales 84 n'est pas rectiligne. Néanmoins, comme pour les incisions allongées 82 décrites en référence aux figures précédentes, lorsqu'on se déplace le long de l'incision allongée 82 dans la portion centrale 84 depuis le premier point de dimensionnement 94 définissant la direction d'élancement Ei jusqu'au deuxième point de dimensionnement 96, on ne change pas de sens de déplacement par rapport à la direction d'élancement Ei.

A la différence des incisions allongées 82 décrites en référence aux figures précédentes, les premières et deuxièmes portions allongées 86, 88 sont courbées dans la même direction.

A la différence des incisions allongées 82 décrites en référence aux figures précédentes, l'incision allongée 82 de la figure 12 comprend une unique portion d'allongement 86.

L'invention ne se limite pas aux modes de réalisation précédemment décrits.

## Revendications

1. Pneumatique (10) comprenant une bande de roulement (14) comprenant une pluralité de pains (20) délimités par une pluralité de découpures (62, **64,** 66, 68, 70, 72), au moins un pain (20) de la pluralité de pains (20) comprend une incision (82), dite allongée, l'incision allongée (82) étant ménagée dans ledit pain (20), l'incision allongée (82) comprenant :
- des première et deuxième extrémités borgnes (90, 92) séparées de chaque découpure (62, **64,** 66, 68, 70, 72) adjacente au pain (20) par une épaisseur non nulle du ou des matériaux constituant le pain (20),
- des premier et deuxième points de dimensionnement (94, 96) définissant une direction d'élancement (Ei) de l'incision allongée (82) et une dimension maximale (Lmax) de l'incision allongée (82) selon la direction d'élancement (Ei) de l'incision allongée (82), chaque premier et deuxième point de dimensionnement (94, 96) étant distinct de chaque première et deuxième extrémité borgne (90, 92),
les première et deuxième extrémités borgnes (90, 92) et les premier et deuxième points de dimensionnement (94, 96) étant agencés de façon à définir :
- une portion centrale (84) de l'incision allongée (82) agencée entre les premier et deuxième points de dimensionnement (94, 96) définissant la direction d'élancement (Ei) de l'incision allongée (82),
- au moins une portion d'allongement (86, 88) de l'incision allongée (82) agencée entre un des premier et deuxième points de dimensionnement (94, 96) définissant la direction d'élancement (Ei) de l'incision allongée (82) et une des première et deuxième extrémités borgnes (90, 92), la ou chaque portion d'allongement (86, 88) étant communicante avec la portion centrale (84),
la portion centrale (84) et la ou chaque portion d'allongement (86, 88) étant agencées de sorte que, lorsqu'on se déplace le long de l'incision allongée (82) depuis la ou chaque portion d'allongement (86, 88) vers la portion centrale (84), on change de sens de déplacement par rapport à la direction d'élancement (Ei) de l'incision allongée (82) lorsqu'on passe par ledit point de dimensionnement (94, 96) de l'incision allongée (82) définissant la direction d'élancement (Ei) de l'incision allongée (82),
le rapport entre :
- la longueur curviligne de la ou chaque portion d'allongement (86, 88), et
- la longueur curviligne de la portion centrale (84),
est strictement inférieur à 1,0.

2. Pneumatique (10) selon la revendication précédente, dans lequel les première et deuxième extrémités borgnes (90, 92) et les premier et deuxième points de dimensionnement (94, 96) définissant la direction d'élancement (Ei) de l'incision allongée (82) sont agencés de façon à définir des première et deuxième portions d'allongement (86, 88) agencées respectivement entre chaque premier et deuxième point de dimensionnement (94, 96) définissant la direction d'élancement (Ei) de l'incision allongée (82) et chaque première et deuxième extrémité borgne,
la portion centrale (84) et chaque première et deuxième portion d'allongement (86, 88) étant agencées de sorte que, lorsqu'on se déplace le long de l'incision allongée (82) depuis chaque première et deuxième portion d'allongement (86, 88) vers la portion centrale (84), on change de sens de déplacement par rapport à la direction d'élancement (Ei) de l'incision allongée (82) lorsqu'on passe respectivement par chaque premier et deuxième point de dimensionnement (94, 96) de l'incision allongée (82) définissant la direction d'élancement (Ei) de l'incision allongée (82),
le rapport entre :
- la longueur curviligne de chaque première et deuxième portion d'allongement (86, 88), et
- la longueur curviligne de la portion centrale (84),
est strictement inférieur à 1,0.

3. Pneumatique (10) selon l'une quelconque des revendications précédentes, ledit pneumatique étant adapté pour une utilisation en compétition, de préférence en compétition rallye et plus préférentiellement en compétition rallye au moins sur sol terreux et/ou graveleux et/ou boueux et très préférentiellement en compétition rallye sur sol terreux

4. Pneumatique (10) selon l'une quelconque des revendications précédentes, dans lequel la portion centrale (84) est agencée de sorte que, lorsqu'on se déplace le long de l'incision allongée (82) dans la portion centrale (84) depuis le premier point de dimensionnement (94) définissant la direction d'élancement de l'incision allongée (82) jusqu'au deuxième point de dimensionnement (96) définissant la direction d'élancement (Ei) de l'incision allongée (82), on ne change pas de sens de déplacement par rapport à la direction d'élancement (Ei) de l'incision allongée (82).

5. Pneumatique (10) selon l'une quelconque des revendications précédentes, dans lequel la ou chaque portion d'allongement (86, 88) est agencée de sorte que, lorsqu'on se déplace le long de l'incision allongée (82) dans ladite portion d'allongement (86, 88) depuis ledit point de dimensionnement (94, 96) définissant la direction d'élancement (Ei) de l'incision allongée (82) jusqu'à l'extrémité borgne (90, 92) la plus proche en se déplaçant le long de l'incision allongée (82), on ne change pas de sens de déplacement par rapport à la direction d'élancement (Ei) de l'incision allongée (82).

6. Pneumatique (10) selon l'une quelconque des revendications précédentes, la ou chaque portion d'allongement (86, 88) s'étendant selon une direction d'allongement (Ea1, Ea2), la direction d'allongement (Ea1, Ea2) de la ou chaque portion d'allongement (86, 88) et la direction d'élancement (Ei) de l'incision allongée (82) forment un angle inférieur ou égal à 80°, de préférence allant de 30° à 70° et plus préférentiellement allant de 30° à 50°.

7. Pneumatique (10) selon l'une quelconque des revendications précédentes, dans lequel la direction moyenne d'élancement (Ep) du pain (20) et la direction d'élancement (Ei) de l'incision allongée (82) forment un angle inférieur ou égal à 45°, de préférence à 30°, plus préférentiellement à 15° et encore plus préférentiellement à 5°.

8. Pneumatique (10) selon l'une quelconque des revendications précédentes, dans lequel le rapport entre :
- la distance (Li) selon la direction moyenne d'élancement (Ep) du pain (20) entre les premier et deuxième points de dimensionnement (94, 96) de l'incision allongée (82) définissant la direction d'élancement (Ei) de l'incision allongée (82), et
- la distance (Lp) selon la direction moyenne d'élancement (Ep) du pain (20) entre des premier et deuxième points de dimensionnement (98, 100) du pain (20),
est supérieur ou égal à 0,5, de préférence à 0,7.

9. Pneumatique (10) selon l'une quelconque des revendications précédentes, dans lequel le rapport entre :
- la distance (li) selon une direction (Epp) perpendiculaire à la direction moyenne d'élancement (Ep) du pain (20) entre des premier et deuxième points de dimensionnement (90, 92) de l'incision allongée (82) selon la direction (Epp) perpendiculaire à la direction moyenne d'élancement (Ep) du pain (20) et
- la distance (lp) selon la direction (Epp) perpendiculaire à la direction moyenne d'élancement (Ep) du pain (20) entre des premier et deuxième points de dimensionnement (102, 104) du pain (20) selon la direction (Epp) perpendiculaire à la direction moyenne d'élancement (Ep) du pain (20),
est supérieur ou égal à 0,3, de préférence à 0,5.

10. Pneumatique (10) selon l'une quelconque des revendications précédentes, dans lequel le rapport entre :
- la longueur curviligne de la ou chaque portion d'allongement (86, 88), et
- la longueur curviligne de la portion centrale (84),
est supérieur ou égal à 0,1, de préférence à 0,2 et plus préférentiellement va de 0,2 à 0,5.

11. Pneumatique (10) selon l'une quelconque des revendications précédentes, dans lequel le ou chaque pain (20) comprend une unique incision (82), l'unique incision étant l'incision allongée (82).

12. Utilisation d'un pneumatique (10) selon l'une quelconque des revendications précédentes en compétition, de préférence en compétition rallye et plus préférentiellement en compétition rallye au moins sur sol terreux et/ou graveleux et/ou boueux et très préférentiellement en compétition rallye sur sol terreux.

## Patentansprüche

1. Luftreifen (10), der einen Laufstreifen (14) umfasst, der eine Vielzahl von Profilblöcken (20) umfasst, die durch eine Vielzahl von Ausschnitten (62, 64, 66, 68, 70, 72) begrenzt werden, wobei mindestens ein Profilblock (20) der Vielzahl von Profilblöcken (20) einen als länglich bezeichneten Einschnitt (82) umfasst, wobei der längliche Einschnitt (82) in dem Profilblock (20) ausgebildet ist, wobei der längliche Einschnitt (82) umfasst:
- erste und zweite Blindenden (90, 92), die von jedem an den Profilblock (20) angrenzenden Ausschnitt (62, 64, 66, 68, 70, 72) durch eine Dicke ungleich Null des oder der Materialien, aus dem oder denen der Profilblock (20) besteht, getrennt sind,
- erste und zweite Dimensionierungspunkte (94, 96), die eine Erstreckungsrichtung (Ei) des länglichen Einschnitts (82) und eine maximale Dimension (Lmax) des länglichen Einschnitts (82) entlang der Erstreckungsrichtung (Ei) des länglichen Einschnitts (82) definieren, wobei jeder erste und zweite Dimensionierungspunkt (94, 96) von jedem ersten und zweiten Blindende (90, 92) verschieden ist,
wobei das erste und das zweite Blindende (90, 92) und der erste und der zweite Dimensionierungspunkt (94, 96) so angeordnet sind, dass sie definieren:
- einen zentralen Abschnitt (84) des länglichen Einschnitts (82), der zwischen dem ersten und dem zweiten Dimensionierungspunkt (94, 96), die die Erstreckungsrichtung (Ei) des länglichen Einschnitts (82) definieren, angeordnet ist,
- mindestens einen Verlängerungsabschnitt (86, 88) des länglichen Einschnitts (82), der zwischen einem der ersten und zweiten Dimensionierungspunkte (94, 96), die die Erstreckungsrichtung (Ei) des länglichen Einschnitts (82) definieren, und einem der ersten und zweiten Blindenden (90, 92) angeordnet ist, wobei der oder jeder Verlängerungsabschnitt (86, 88) mit dem zentralen Abschnitt (84) in Verbindung steht,
wobei der zentrale Abschnitt (84) und der oder jeder Verlängerungsabschnitt (86, 88) so angeordnet sind, dass man, wenn man sich entlang des länglichen Einschnitts (82) von dem oder jedem Verlängerungsabschnitt (86, 88) aus zu dem zentralen Abschnitt (84) hin bewegt, die Bewegungsrichtung in Bezug auf die Erstreckungsrichtung (Ei) des länglichen Einschnitts (82) ändert, wenn man den Dimensionierungspunkt (94, 96) des länglichen Einschnitts (82), der die Erstreckungsrichtung (Ei) des länglichen Einschnitts (82) definiert, durchläuft,
wobei das Verhältnis zwischen:
- der krummlinigen Länge des oder jedes Verlängerungsabschnitts (86, 88), und
- der krummlinigen Länge des zentralen Abschnitts (84),
strikt kleiner als 1,0 ist.

2. Luftreifen (10) nach dem vorhergehenden Anspruch, wobei das erste und das zweite Blindende (90, 92) und der erste und der zweite Dimensionierungspunkt (94, 96), die die Erstreckungsrichtung (Ei) des länglichen Einschnitts (82) definieren, so angeordnet sind, dass sie erste und zweite Verlängerungsabschnitte (86, 88) definieren, die jeweils zwischen jedem ersten und zweiten Dimensionierungspunkt (94, 96), die die Erstreckungsrichtung (Ei) des länglichen Einschnitts (82) definieren, und jedem ersten und zweiten Blindende angeordnet sind,
wobei der zentrale Abschnitt (84) und jeder erste und zweite Verlängerungsabschnitt (86, 88) so angeordnet sind, dass man, wenn man sich entlang des länglichen Einschnitts (82) von jedem ersten und zweiten Verlängerungsabschnitt (86, 88) aus zu dem zentralen Abschnitt (84) hin bewegt, die Bewegungsrichtung in Bezug auf die Erstreckungsrichtung (Ei) des länglichen Einschnitts (82) ändert, wenn man jeden ersten beziehungsweise zweiten Dimensionierungspunkt (94, 96) des länglichen Einschnitts (82), der die Erstreckungsrichtung (Ei) des länglichen Einschnitts (82) definiert, durchläuft,
wobei das Verhältnis zwischen:
- der krummlinigen Länge jedes ersten und zweiten Verlängerungsabschnitts (86, 88), und
- der krummlinigen Länge des zentralen Abschnitts (84),
strikt kleiner als 1,0 ist.

3. Luftreifen (10) nach einem der vorhergehenden Ansprüche, wobei der Luftreifen zur Verwendung im Wettbewerb, vorzugsweise im Rallye-Wettbewerb und noch bevorzugter im Rallye-Wettbewerb mindestens auf erdigem und/oder kiesigem und/oder schlammigem Boden und besonders bevorzugt im Rallye-Wettbewerb auf erdigem Boden geeignet ist.

4. Reifen (10) nach einem der vorhergehenden Ansprüche, wobei der zentrale Abschnitt (84) so angeordnet ist, dass man, wenn man sich entlang des länglichen Einschnitts (82) in dem zentralen Abschnitt (84) von dem ersten Dimensionierungspunkt (94) aus, der die Erstreckungsrichtung des länglichen Einschnitts (82) definiert, bis zu dem zweiten Dimensionierungspunkt (96), der die Erstreckungsrichtung (Ei) des länglichen Einschnitts (82) definiert, bewegt, die Bewegungsrichtung in Bezug auf die Erstreckungsrichtung (Ei) des länglichen Einschnitts (82) nicht ändert.

5. Luftreifen (10) nach einem der vorhergehenden Ansprüche, wobei der oder jeder Verlängerungsabschnitt (86, 88) so angeordnet ist, dass man, wenn man sich entlang des länglichen Einschnitts (82) in dem Verlängerungsabschnitt (86, 88) von dem Dimensionierungspunkt (94, 96) aus, der die Erstreckungsrichtung (Ei) des länglichen Einschnitts (82) definiert, bis zu dem nächstgelegenen Blindende (90, 92) bewegt, wobei man sich entlang des länglichen Einschnitts (82) bewegt, die Bewegungsrichtung in Bezug auf die Erstreckungsrichtung (Ei) des länglichen Einschnitts (82) nicht ändert.

6. Luftreifen (10) nach einem der vorhergehenden Ansprüche, wobei der oder jeder Verlängerungsabschnitts (86, 88) sich entlang einer Verlängerungsrichtung (Ea1, Ea2) erstreckt, wobei die Verlängerungsrichtung (Ea1, Ea2) des oder jedes Verlängerungsabschnitts (86, 88) und die Erstreckungsrichtung (Ei) des länglichen Einschnitts (82) einen Winkel kleiner oder gleich 80°, vorzugsweise zwischen 30° und 70° und noch bevorzugter zwischen 30° und 50° bilden.

7. Luftreifen (10) nach einem der vorhergehenden Ansprüche, wobei die mittlere Erstreckungsrichtung (Ep) des Profilblocks (20) und die Erstreckungsrichtung (Ei) des länglichen Einschnitts (82) einen Winkel kleiner oder gleich 45°, vorzugsweise kleiner oder gleich 30°, noch bevorzugter kleiner oder gleich 15° und noch stärker bevorzugt kleiner oder gleich 5° bilden.

8. Luftreifen (10) nach einem der vorhergehenden Ansprüche, wobei das Verhältnis zwischen:
- dem Abstand (Li) entlang der mittleren Erstreckungsrichtung (Ep) des Profilblocks (20) zwischen dem ersten und dem zweiten Dimensionierungspunkt (94, 96) des länglichen Einschnitts (82), die die Erstreckungsrichtung (Ei) des länglichen Einschnitts (82) definieren, und
- dem Abstand (Lp) entlang der mittleren Erstreckungsrichtung (Ep) des Profilblocks (20) zwischen dem ersten und dem zweiten Dimensionierungspunkt (98, 100) des Profilblocks (20),
größer oder gleich 0,5, vorzugsweise größer oder gleich 0,7 ist.

9. Luftreifen (10) nach einem der vorhergehenden Ansprüche, wobei das Verhältnis zwischen:
- dem Abstand (Ii) entlang einer Richtung (Epp) senkrecht zu der mittleren Erstreckungsrichtung (Ep) des Profilblocks (20) zwischen dem ersten und dem zweiten Dimensionierungspunkt (90, 92) des länglichen Einschnitts (82) entlang der Richtung (Epp) senkrecht zu der mittleren Erstreckungsrichtung (Ep) des Profilblocks (20) und
- dem Abstand (Ip) entlang der Richtung (Epp) senkrecht zu der mittleren Erstreckungsrichtung (Ep) des Profilblocks (20) zwischen dem ersten und dem zweiten Dimensionierungspunkt (102, 104) des Profilblocks (20) entlang der Richtung (Epp) senkrecht zu der mittleren Erstreckungsrichtung (Ep) des Profilblocks (20),
größer oder gleich 0,3, vorzugsweise größer oder gleich 0,5 ist.

10. Luftreifen (10) nach einem der vorhergehenden Ansprüche, wobei das Verhältnis zwischen:
- der krummlinigen Länge des oder jedes Verlängerungsabschnitts (86, 88), und
- der krummlinigen Länge des zentralen Abschnitts (84),
größer oder gleich 0,1, vorzugsweise größer oder gleich 0,2 ist und noch bevorzugter zwischen 0,2 und 0,5 liegt.

11. Luftreifen (10) nach einem der vorhergehenden Ansprüche, wobei der oder jeder Profilblock (20) einen einzigen Einschnitt (82) umfasst, wobei der einzige Einschnitt der längliche Einschnitt (82) ist.

12. Verwendung eines Luftreifens (10) nach einem der vorhergehenden Ansprüche im Wettbewerb, vorzugsweise im Rallye-Wettbewerb und noch bevorzugter im Rallye-Wettbewerb mindestens auf erdigem und/oder kiesigem und/oder schlammigem Boden und besonders bevorzugt im Rallye-Wettbewerb auf erdigem Boden.

## Claims

1. Tyre (10) comprising a tread (14) comprising a plurality of tread blocks (20) delimited by a plurality of cuts (62, 64, 66, 68, 70, 72), at least one tread block (20) of the plurality of tread blocks (20) comprises a sipe (82), called elongate sipe, with the elongate sipe (82) being provided in said tread block (20), the elongate sipe (82) comprising:
- first and second blind ends (90, 92) separated from each cut (62, 64, 66, 68, 70, 72) adjacent to the tread block by a non-zero thickness of the one or more constituent materials of the tread block (20);
- first and second dimensioning points (94, 96) defining a slenderness direction (Ei) of the elongate sipe (82) and a maximum dimension (Lmax) of the elongate sipe (82) in the slenderness direction (Ei) of the elongate sipe (82), each first and second dimensioning point (94, 96) being distinct from each first and second blind end (90, 92);
the first and second blind ends (90, 92) and the first and second dimensioning points (94, 96) being arranged so as to define:
- a central portion (84) of the elongate sipe (82) arranged between the first and second dimensioning points (94, 96) defining the slenderness direction (Ei) of the elongate sipe (82);
- at least one elongation portion (86, 88) of the elongate sipe (82) arranged between one of the first and second dimensioning points (94, 96) defining the slenderness direction (Ei) of the elongate sipe (82) and one of the first and second blind ends (90, 92), with the one or each elongation portion (86, 88) being connected to the central portion (84);
the central portion (84) and the one or each elongation portion (86, 88) being arranged such that, when moving along the elongate sipe (82) from the one or each elongation portion (86, 88) towards the central portion (84), the direction of movement is changed with respect to the slenderness direction (Ei) of the elongate sipe (82) when passing through said dimensioning point (94, 96) of the elongate sipe (82) defining the slenderness direction (Ei) of the elongate sipe (82);
the ratio of:
- the curvilinear length of the one or each elongation portion (86, 88); to
- the curvilinear length of the central portion (84),
is strictly less than 1.0.

2. Tyre (10) according to the preceding claim, wherein the first and second blind ends (90, 92) and the first and second dimensioning points (94, 96) defining the slenderness direction (Ei) of the elongate sipe (82) are arranged so as to define first and second elongation portions (86, 88), respectively arranged between each first and second dimensioning point (94, 96) defining the slenderness direction (Ei) of the elongate sipe (82) and each first and second blind end,
the central portion (84) and each first and second elongation portion (86, 88) being arranged such that, when moving along the elongate sipe (82) from each first and second elongation portion (86, 88) towards the central portion (84), the direction of movement is changed with respect to the slenderness direction (Ei) of the elongate sipe (82) when respectively passing through each first and second dimensioning point (94, 96) of the elongate sipe (82) defining the slenderness direction (Ei) of the elongate sipe (82);
the ratio of:
- the curvilinear length of each first and second elongation portion (86, 88); to
- the curvilinear length of the central portion (84),
is strictly less than 1.0.

3. Tyre (10) according to any one of the preceding claims, said tyre being adapted for use in racing, preferably in rally racing and more preferably in rally racing at least on rocky and/or gravelly and/or muddy ground and very preferably in rally racing on rocky ground.

4. Tyre (10) according to any one of the preceding claims, wherein the central portion (84) is arranged such that, when moving along the elongate sipe (82) in the central portion (84) from the first dimensioning point (94) defining the slenderness direction of the elongate sipe (82) to the second dimensioning point (96) defining the slenderness direction (Ei) of the elongate sipe (82), the direction of movement is not changed with respect to the slenderness direction (Ei) of the elongate sipe (82).

5. Tyre (10) according to any one of the preceding claims, wherein the one or each elongation portion (86, 88) is arranged such that, when moving along the elongate sipe (82) in said elongation portion (86, 88) from said dimensioning point (94, 96) defining the slenderness direction (Ei) of the elongate sipe (82) to the nearest blind end (90, 92) by moving along the elongate sipe (82), the direction of movement is not changed with respect to the slenderness direction (Ei) of the elongate sipe (82).

6. Tyre (10) according to any one of the preceding claims, wherein, with the one or each elongation portion (86, 88) extending in an elongation direction (Ea1, Ea2), the elongation direction (Ea1, Ea2) of the one or each elongation portion (86, 88) and the slenderness direction (Ei) of the elongate sipe (82) form an angle that is less than or equal to 80°, preferably ranging from 30° to 70° and more preferably ranging from 30° to 50°.

7. Tyre (10) according to any one of the preceding claims, wherein the average slenderness direction (Ep) of the tread block (20) and the slenderness direction (Ei) of the elongate sipe (82) form an angle that is less than or equal to 45°, preferably to 30°, more preferably to 15° and even more preferably to 5°.

8. Tyre (10) according to any one of the preceding claims, wherein the ratio of:
- the distance (Li) in the average slenderness direction (Ep) of the tread block (20) between the first and second dimensioning points (94, 96) of the elongate sipe (82) defining the slenderness direction (Ei) of the elongate sipe (82); to
- the distance (Lp) in the average slenderness direction (Ep) of the tread block (20) between the first and second dimensioning points (98, 100) of the tread block (20),
is greater than or equal to 0.5, preferably to 0.7.

9. Tyre (10) according to any one of the preceding claims, wherein the ratio of:
- the distance (li) in a direction (Epp) perpendicular to the average slenderness direction (Ep) of the tread block (20) between first and second dimensioning points (90, 92) of the elongate sipe (82) in the direction (Epp) perpendicular to the average slenderness direction (Ep) of the tread block (20); to
- the distance (Ip) in the direction (Epp) perpendicular to the average slenderness direction (Ep) of the tread block (20) between first and second dimensioning points (102, 104) of the tread block (20) in the direction (Epp) perpendicular to the average slenderness direction (Ep) of the tread block (20),
is greater than or equal to 0.3, preferably to 0.5.

10. Tyre (10) according to any one of the preceding claims, wherein the ratio of:
- the curvilinear length of the one or each elongation portion (86, 88); to
- the curvilinear length of the central portion (84),
is greater than or equal to 0.1, preferably to 0.2 and more preferably ranges from 0.2 to 0.5.

11. Tyre (10) according to any one of the preceding claims, wherein the one or each tread block (20) comprises a single sipe (82), the single sipe being the elongate sipe (82).

12. Use of a tyre (10) according to any one of the preceding claims in racing, preferably in rally racing and more preferably in rally racing at least on rocky and/or gravelly and/or muddy ground and very preferably in rally racing on rocky ground.
